# EUROPÄISCHE PATENTSCHRIFT

(11) **EP 2 835 180 B1**
(45) Veröffentlichungstag und Bekanntmachung des Hinweises auf die Patenterteilung: **06.04.2016**
(21) Anmeldenummer: 13179406.7
(22) Anmeldetag: 06.08.2013
(51) Int. Cl.: B05B 15/02, B05C 5/02

(54) **Vorrichtung zum Ausgeben von fließfähigen Stoffen**
Device for dispensing flowing substances
Dispositif de distribution de produits fluides

(43) Veröffentlichungstag der Anmeldung: 11.02.2015
(73) Patentinhaber: Robatech AG, 5630 Muri (CH)
(72) Erfinder: Ineichen, Beatus, 6353 Weggis (CH); Meier, Martin, 5621 Zufikon (CH)
(74) Vertreter: Quermann, Helmut

(56) Entgegenhaltungen:
- EP-A2- 2 006 030
- WO-A1-95/33675
- DE-A1- 3 528 926
- DE-A1- 3 908 453
- DE-A1- 4 113 445
- DE-U1- 29 809 483
- FR-A1- 2 972 944
- JP-A- 2012 232 269
- US-A- 6 024 250

## Beschreibung

Die vorliegende Erfindung betrifft eine Vorrichtung zum Ausgeben von fließfähigen Stoffen, insbesondere von Klebstoffen, Farben, Lacken und Trennmitteln.

Derartige Vorrichtungen werden zum Beispiel dafür verwendet, portionsweise Klebstoffe auf ein Substrat aufzubringen. Die Auftragung der Klebstoffe erfolgt dabei gesteuert über ein Dosierventil, wobei insbesondere ein Linien-, Punkt-, Sprüh-, Spiral- oder Flächenauftrag möglich ist.

Problematisch ist bei der Verarbeitung von fließfähigen Stoffen mit Dosierventilen, dass sich Rückstände des Stoffes am Auslass des Dosierventils ansammeln können und, insbesondere wenn sie dort aushärten, den nachfolgenden Betrieb der Vorrichtung stören oder gar zum Erliegen bringen können.

Eine Vorrichtung zum Ausgeben von fließfähigen Stoffen, die die Merkmale des Oberbegriffs des Patentanspruchs 1 aufweist, ist aus der US 6 024 250 A bekannt. Bei dieser ist ein Verschlussteil vorgesehen, dessen Schwenkachse sich nicht mit einer Austrittsachse einer Düse kreuzt. Bei ausgerichteter Vorrichtung ist die Düsenachse vertikal und die Schwenkachse des Verschlussteils horizontal angeordnet. Unter Einwirkung einer Feder wird das Verschlussteil in dessen Schließstellung geschwenkt, in der eine Verschlussteilfäche, senkrecht zur Austrittsachse der Düse orientiert, eine Austrittsöffnung der Düse kontaktiert und damit verschließt. Mittels eines Pneumatikzylinders lässt sich das Verschlussteil von dessen Schließstellung in dessen Öffnungsstellung entgegen der Kraft der Feder schwenken.

Eine Vorrichtung zum Ausgeben von fließfähigen Stoffen ist ferner aus der DE 41 13 445 A1 bekannt. Diese Vorrichtung weist eine Düse auf, die im Bereich eines freien Düsenendes eine Austrittsöffnung zum Ausgeben der Stoffe aus der Düse aufweist. Außerhalb der Düse ist ein durch ein Stellmittel verfahrbares Verschlussteil angeordnet, dass in einer Öffnungsstellung die Austrittsöffnung freigibt und in einer Schließstellung, im Bereich einer dem Düsenende zugewandten Verschlussteilfläche, die Austrittsöffnung verschließt. Die Verschlussteilfläche ist, in Bewegungsrichtung des Verschlussteils von der Öffnungsstellung in die Schließstellung, vorlaufend durch eine Vorlaufkante begrenzt. Beim Überführen des Verschlussteils in dessen Schließstellung gelangt somit jeweils die Vorlaufkante zunächst in Anlage mit dem freien Düsenende, bevor das Verschlussteil mit seiner Verschlussteilfläche flächig das freie Düsenende kontaktiert und die Austrittsöffnung der Düse verschließt. Diese Einwirkung des freien Düsenendes auf die Vorlaufkante bei jedem Schließvorgang des Verschlussteils führt zu einem erhöhten Verschleiß der Vorlaufkante und damit zu einer reduzierten Standzeit der Vorrichtung.

Eine Vorrichtung zum Ausgeben von fließfähigen Stoffen ist ferner in der DE 199 36 670 C1 beschrieben. Diese Vorrichtung weist einen feststehenden Träger, ein mit dem Träger verbundenes Dosierventil mit Austrittsdüse für die fließfähigen Stoffe, ferner ein äußeres Verschlussteil zum Verschließen der Austrittsöffnung der Düse auf. Hierbei ist das Verschlussteil stationär und es wird das Dosierventil bzw. die Düse relativ zum Verschlussteil geschwenkt. Auch bei dieser Gestaltung kontaktiert eine Vorlaufkante des Verschlussteils beim jeweiligen Schließvorgang die Düse im Bereich des freien Düsenendes, mit dem beschriebenen Nachteil des erhöhten Verschleißes des Verschlussteils im Bereich der Vorlaufkante.

Eine Vorrichtung zum Ausgeben von fließfähigen Stoffen mit einer Düse und einem Verschlussteil für die Düse ist ferner aus der EP 0 719 592 A2 bekannt. Auch bei dieser Vorrichtung kontaktiert eine Vorlaufkante des Verschlussteils beim Überführen des Verschlussteils in dessen Schließstellung die Düse im Bereich deren freien Düsenendes.

Aufgabe der vorliegenden Erfindung ist es, eine Vorrichtung zum Ausgeben von fließfähigen Stoffen, die die Merkmale des Oberbegriffs des Patentanspruchs 1 aufweist, so weiterzubilden, dass mit dieser eine große Anzahl von Verschlusszyklen ohne Beschädigung des Verschlussteils vollführt werden kann.

Gelöst wird die Aufgabe durch eine Vorrichtung, die gemäß den Merkmalen des Patentanspruchs 1 ausgebildet ist.

Erfindungsgemäß ist somit das Verschlussteil mittels des Stellelements derart verfahrbar, dass die Verschlussteilfläche, bei Kontakt mit der Düse im Bereich deren Austrittsöffnung, mit einer Bewegungskomponente senkrecht zu einer Austrittsachse der Austrittsöffnung der Düse relativ zu dieser bewegt wird. Diese Bewegung des Verschlussteils bewirkt eine Reinigung der Düse im Bereich deren Austrittsöffnung.

Bei der Vorrichtung ist vorgesehen, dass die dem Düsenende zugewandte Fläche des Verschlussteils, somit die Verschlussteilfläche, in der Offenstellung neben der Düse und auf einem Niveau stromaufwärts der Austrittsöffnung, bezogen auf die Strömungsrichtung der Stoffe durch die Düse, angeordnet ist. Ferner ist gemäß der Erfindung vorgesehen, dass mittels des Stellmittels das Verschlussteil derart von der Öffnungsstellung in die Schließstellung bewegbar ist, dass die Vorlaufkante der Verschlussteilfläche an dem freien Düsenende vorbei bewegt wird.

Demnach kontaktiert das Verschlussteil beim Überführen des Verschlussteils von der Öffnungsstellung in die Schließstellung nicht mit der Vorlaufkante zunächst die Düse im Bereich deren freien Düsenendes, sondern es wird die Vorlaufkante an diesem Düsenende vorbeigeführt, womit das Verschlussteil hinter der Vorlaufkante in anfänglichen Kontakt mit der Düse gelangt. Damit ist eine Beschädigung der Vorlaufkante beim Bewegen des Verschlussteils von der Öffnungsstellung in die Schließstellung ausgeschlossen. Durch die Bewegung des Verschlussteils wird die Austrittsöffnung der Düse gereinigt.

Es wird als besonders vorteilhaft angesehen, wenn das Verschlussteil bei Kontakt mit der Düse möglichst großflächig das freie Düsenende kontaktiert, womit unmittelbar ein Verschluss der Austrittsöffnung der Düse stattfindet.

Die Bewegung des Verschlussteils relativ zur Düse im Bereich der Austrittsöffnung ist vorzugsweise so gewählt, dass das Verschlussteil mit einer Bewegungskomponente senkrecht zur Strömungsrichtung der Stoffe durch die Düse bezüglich der Austrittsöffnung bewegt wird. In der Konsequenz bedingt diese Bewegung bei hohem Wirkungsgrad, dass das Verschlussteil Stoffreste, die sich im Bereich der Austrittsöffnung der Düse angesammelt haben, nahezu vollständig zur Seite mitnimmt, somit die Düse im Bereich der Austrittsöffnung von Stoffresten befreit.

Die Anordnung der Verschlussteilfläche in der Offenstellung, neben der Düse und auf einem Niveau stromaufwärts der Austrittsöffnung, ermöglicht es einerseits, das Verschlussteil im Bereich deren Verschlussteilfläche benachbart der Düse anzuordnen, allerdings in einem Bereich, in dem das Verschlussteil bzw. die Verschlussteilfläche ein Ausgeben der fließfähigen Stoffe aus der Düse nicht behindert. Die genannte Anordnung der Verschlussteilfläche ermöglicht es, die Vorrichtung im Bereich von Düse und Verschlussteil, insbesondere die Verschlussteilfläche, sehr kompakt zu gestalten. Dies ist von Vorteil, weil es erlaubt, durchaus eine Vielzahl von Düsen mit zugeordneten Verschlussteilen seitlich nebeneinander anzuordnen. Der Vorteil dieser Gestaltung zeigt sich darin, dass sich Klebstoffspuren in einem engen Abstand von beispielsweise 15 mm, insbesondere von 13 mm, auf das Substrat auftragen lassen.

Vorzugsweise ist die die Düse aufweisende Auftragungsvorrichtung/Dosier-einheit mit einem integrierten Führungsschuh versehen, der ein sich unterhalb der Düse bewegendes Substrat führt. Hierbei ermöglicht eine schmale und dünne Ausgestaltung des Verschlussteils einen geringen Abstand zwischen Austrittsöffnung der Düse und Substrat, beispielsweise einen Abstand von maximal 5 mm, insbesondere 3 mm. Weiterhin ermöglicht die Kinematik des Verschlussteils, dass die Düse in ihrer Dosierposition verbleiben kann, wenn das Verschlussteil in seine Schließstellung überführt wird.

Vorzugsweise ist die Düse in Richtung des Düsenendes verjüngend ausgebildet und es ist die Verschlussteilfläche in der Offenstellung neben dem sich verjüngenden Düsenbereich angeordnet. Diese Gestaltung des Düsenendes trägt dazu bei, das Verschlussteil auf kurzem Stellweg von dessen Öffnungsstellung in dessen Schließstellung zu überführen, bei Vollführen einer relativ einfachen Stellbewegung zwischen Öffnungsstellung und Schließstellung.

Gemäß einer besonderen Ausführungsform der Erfindung ist vorgesehen, dass das Verschlussteil Federeigenschaft aufweist. Diese Eigenschaft ermöglicht es, die Verschlussteilfläche, nach Kontakt mit der Austrittsöffnung der Düse, mit einer gewissen Vorspannung gegen die Düse zu drücken und damit einen sicheren Verschluss der Austrittsöffnung zu gewährleisten.

Grundsätzlich ist es möglich, dass das Verschlussteil einstückig ausgebildet ist, somit insbesondere keine unterschiedliche Materialeigenschaften im Bereich der Verschlussteilfläche und dem verbleibenden Bereich des Verschlussteils, insbesondere einem Lagerbereich des Verschlussteils aufweist. In diesem Fall besteht das Verschlussteil vorzugsweise aus Metall oder Kunststoff.

Vorzugsweise ist das Verschlussteil derart gestaltet, dass es im Bereich dessen dem Stellmittel abgewandten Endes einen Verschlussteilabschnitt aufweist, der die Verschlussteilfläche aufweist. Im Bereich des einen Endes ist das Verschlussteil im Stellmittel gelagert, somit in dem Mittel zum Verfahren des Verschlussteils von der Öffnungsstellung in die Schließstellung. Im Bereich des anderen Endes weist das Verschlussteil den Verschlussteilabschnitt mit der Verschlussteilfläche auf, somit die Fläche, mittels der die Austrittsöffnung der Düse verschließbar ist.

Gemäß einer bevorzugten Weiterbildung ist vorgesehen, dass der Verschlussteilabschnitt ein Basiselement und eine vom Basiselement aufgenommene Platte aufweist, wobei die Platte auf deren dem Basiselement abgewandten Seite die Verschlussteilfläche aufweist. Das Basiselement stellt das Trägerelement für die Platte dar, die eine andere Materialeigenschaft als das Basiselement aufweist. Vorzugsweise ist die Platte elastisch verformbar, weist insbesondere gummielastische Eigenschaften auf.

Die Ausbildung der Platte als elastisches Bauteil hat den Vorteil, dass die Platte in der Schließstellung unter Vorspannung, somit elastischer Verformung, die Düse im Bereich deren Austrittsöffnung kontaktiert und damit sicher verschließt. Von Vorteil ist die elastische Eigenschaft auch deshalb, weil bereits vor Erreichen einer Endverfahrstellung des Verschlussteils der Verschlussteilabschnitt die Düse im Bereich deren Austrittsöffnung kontaktiert und verschließt und unter elastischer Verformung der Platte das Verschlussteil in dessen Schließstellung überführt wird, bei unter Umständen veränderter Verformung der Platte. So kann in der Endstellung des Verschlussteils die elastische verformbare Platte mit maximaler, elastisch bedingter Kraft auf das Düsenende einwirken oder aber, infolge der vollführten Bewegung des Verschlussteils, mit einer geringeren elastischen Vorspannung auf das Düsenende einwirken.

Es wird als vorteilhaft angesehen, wenn die Vorlaufkante der Verschlussteilfläche des plattenförmigen Verschlussteilabschnitts mit einer Vorlaufkante des Basiselements übereinstimmt. Bezogen auf die jeweilige Vorlaufkante weist das Verschlussteil somit eine einheitliche Gestaltung auf.

Baulich ist das Verschlussteil insbesondere derart gestaltet, dass es einen endseitigen Lageabschnitt, im Bereich dessen das Verschlussteil stellmittelseitig gelagert ist, den endseitigen Verschlussteilabschnitt und zwischen Lagerabschnitt und Verschlussteilabschnitt einen Verbindungsarm aufweist. Dieser Verbindungsarm ermöglicht die Bewegung vom Stellmittel, das nicht in unmittelbarer Nähe des Düsenendes positioniert werden kann, zum Düsenende zu übertragen. Der Verbindungsarm besteht insbesondere aus Metall oder Kunststoff.

Das Verschlussteil ist vorzugsweise plattenförmig ausgebildet, somit aus einem relativ dünnwandigen Werkstoff hergestellt.

Bezogen auf die Längserstreckung des Verschlussteils kann dieses einen unterschiedlichen Querschnitt aufweisen, beispielsweise einen mehreckigen Querschnitt, insbesondere rechteckigen Querschnitt mit abgerundeten Ecken, oder einen runden Querschnitt.

Es wird als besonders vorteilhaft angesehen, wenn das Verschlussteil mittels des Stellmittels derart verfahrbar ist, dass die Verschlussteilfläche beim Verfahren von der Offenstellung in die Schließstellung parallel verfahren wird. Das Verschlussteil vollführt somit eine recht einfache Bewegung.

Insbesondere ist vorgesehen, dass das Verschlussteil mittels des Stellelements derart verfahrbar ist, dass die Verschlussteilfläche beim Verfahren von der Öffnungsstellung in die Schließstellung senkrecht zu einer Austrittsachse der Austrittsöffnung der Düse angeordnet ist. Diese Anordnung der Verschlussteilfläche in der Schließstellung des Verschlussteils gewährleistet, dass fließfähige Stoffe, die an der Düse im Bereich deren Austrittsöffnung haften, beim Verfahren des Verschlussteils nicht vom Verschlussteil abtropfen, sondern auf der senkrecht zur Austrittsachse der Austrittsöffnung der Düse befindlichen Verschlussteilfläche verbleiben und dort durch geeignete Hilfsmittel vom Verschlussteil entfernt werden können. Durch diese Anordnung der Verschlussteilfläche wird somit verhindert, dass fließfähige Stoffe, die an der Austrittsöffnung der Düse haften, unkontrolliert aus dem Bereich des Verschlussteils gelangen, insbesondere in den Bereich von Substrat.

Es wird als besonders vorteilhaft angesehen, wenn das Verschlussteil mittels des Stellelements derart verfahrbar ist, dass die Verschlussteilfläche aus der Offenstellung in die Schließstellung bogenförmig bewegt wird, insbesondere bei Übertotpunktlagen in der Offenstellung und in der Schließstellung des Verschlussteils sowie einer Totpunktlage in einer Zwischenstellung zwischen Offenstellung und Schließstellung. Demnach wird das Verschlussteil im Bereich seiner Verschlussteilfläche aus der Übertotpunktlage in der Öffnungsstellung, bei Anordnung neben der Düse, in die Totpunktlage bewegt, in der die Verschlussteilfläche in geringfügigem Abstand zur Austrittsöffnung der Düse angeordnet ist, um dann wieder in eine Übertotpunktlage überführt zu werden, in der die Verschlussteilfläche an der Düse im Bereich der Austrittsöffnung der Düse anliegt und diese Austrittsöffnung verschließt. Diese Bewegungen der Verschlussteilfläche von der einen Übertotpunktlage in die Totpunktlage und aus dieser Totpunktlage in die andere Übertotpunktlage erfolgt insbesondere bei einer ausschließlich parallel verschobenen Bewegung der Verschlussteilfläche. Dieser Bewegungsablauf benötigt nur einen geringen Platzbedarf für das Überführen des Verschlussteils von der Offenstellung in die Schließstellung.

Das Stellmittel zum Verfahren des Verschlussteils kann durchaus derart gestaltet sein, dass es sowohl dem Überführen des Verschlussteils von der Offenstellung in die Schließstellung als auch dem Überführen des Verschlussteils von der Schließstellung in die Offenstellung dient. In diesem Fall in insbesondere vorgesehen, dass die Bewegung des Verschlussteils von der Offenstellung in die Schließstellung durch eine Bewegung des Stellmittels bewirkt wird und die Bewegung des Verschlussteils von der Schließstellung in die Offenstellung durch eine entsprechende Rückfahrbewegung des Stellmittels erzielt wird. Grundsätzlich ist es aber durchaus möglich, dass das Stellmittel nur dem Bewegen des Verschlussteils von der Offenstellung in die Schließstellung dient. Die Bewegung von der Schließstellung in die Offenstellung kann über ein anderes Stellmittels erfolgen, beispielsweise durch eine Rückstellfeder.

Gemäß einer besonderen Ausführungsform der Erfindung ist eine Gestaltung der Stellmittel vorgesehen, wobei das Stellmittel aufweist:
- einen Rahmen,
- ein Formschluss erzeugendes, Räder aufweisendes Übertragungsmedium, das eine Winkelsynchronität von im Rahmen schwenkbar gelagerten Rädern erzeugt,
- einen Antrieb für den Riementrieb zum Schwenken des jeweiligen Rades in einer Schwenkrichtung und einer hierzu entgegengesetzten Schwenkrichtung,
- ein in Rädern schwenkbar gelagertes Lagerelement für das Verschlussteil, wobei das Lagerelement um Schwenkachsen in diesen Rädern schwenkbar gelagert ist, wobei diese Schwenkachsen parallel zu den Schwenkachsen dieser Räder im Rahmen angeordnet sind,
wobei das Verschlussteil im Lagerelement gelagert ist.

Die Bewegung des Verschlussteils von der Öffnungsstellung in die Schließstellung und von der Schließstellung in die Öffnungsstellung wird somit mittels des Übertragungsmediums bewerkstelligt. Dieses benötigt in Richtung senkrecht zur Bewegungsrichtung des Verschlussteils nur wenig Bauraum, da es in dieser Richtung kompakt gestaltet ist. Dies ermöglicht es, mehrere Vorrichtungen, demnach mehrere Düsen aufweisende Dosiereinheiten, relativ dicht seitlich nebeneinander anzuordnen. Das Übertragungsmedium ist ein robuster, dauerhaft sicher wirkender Antrieb zum Bewegen des Verschlussteils. Mittels Rädern des Übertragungsmediums ist das Lagerelement definiert schwenkbar in diesen Rädern gelagert, womit eine präzise Führung des Lagerelements gewährleistet ist. Dies stellt ein präzises Verfahren des Verschlussteils zwischen Öffnungsstellung und Schließstellung sicher.

Die Lagerung des Lagerelements in den Rädern bewirkt, dass das Lagerelement und damit das im Lagerelement gelagerte Verschlussteil eine nicht lineare Bewegung bei betätigtem Antrieb vollführen. Die Lagerachsen des Lagerelements in den Rädern bewegen sich, entsprechend den Schwenkbewegungen der Räder, auf einer Kreisbahn, womit sich das Verschlussteil auch auf einer Kreisbahn bewegt. Dies ermöglicht es grundsätzlich, das Verschlussteil so bezüglich der Düse zu positionieren, dass die Vorlaufkante des Verschlussteils nicht in Anlage mit der Düse gelangt, sondern an der Düse vorbeibewegt wird, sodass sich das Verschlussteil erst hinter der Vorlaufkante flächig auf die Austrittsöffnung der Düse auflegt.

Die Vorrichtung gemäß dieser Weiterbildung ermöglicht ein einfaches Bewegen des Verschlussteils von der Öffnungsstellung in die Schließstellung und umgekehrt. Bedingt wird diese Bewegung durch das Antreiben des Übertragungsmediums in entgegengesetzten Richtungen, wodurch Räder, zum Überführen des Verschlussteils von der Öffnungsstellung in die Schließstellung, in einer Schwenkrichtung und, zum Überführen von der Schließstellung in die Öffnungsstellung, in die hierzu entgegengesetzte Schwenkrichtung bewegt werden.

Im Rahmen ist vorzugsweise der Antrieb für das Übertragungsmedium gelagert. Hierbei weist der Antrieb insbesondere ein hin und her verfahrbares Verbindungselement auf, das mit dem Übertragungsmedium verbunden ist. Mit diesem Verbindungselement wirkt der Antrieb zusammen. Beispielsweise wirkt ein Bestandteil des Anteils bildender linear wirkender Aktuator, wenn er beaufschlagt wird, in dem Sinne auf das Verbindungselement, dass es in die eine Laufrichtung bewegt wird. Ist der Aktuator nicht beaufschlagt, wirkt eine beispielsweise Bestandteil des Antriebs wirkende Feder insbesondere auf den Aktuator unmittelbar ein, sodass der Aktuator zurückgestellt wird und hierbei das Verbindungselement in die Ausgangsstellung zurückbewegt wird.

Bevorzugt ist das Verbindungselement mit einem geraden Abschnitt des Übertragungsmediums verbunden und geradlinig in entgegengesetzter Richtung verfahrbar. Das Verbindungselement greift somit in demjenigen Bereich des Übertragungsmediums an diesem an, in dem der dem Verbindungselement zugeordnete Abschnitt des Übertragungsmediums geradlinig ausgebildet ist.

Der Antrieb für das Übertragungsmedium kann beispielsweise auch als Schwenkantrieb ausgeführt sein, der insbesondere direkt eines der Räder des Übertragungsmediums antreibt.

Das Übertragungsmedium weist insbesondere einen Riementrieb oder eine die Räder verbindende, in den Rädern schwenkbar gelagerte Stange oder einen Getriebesatz auf. Beispielsweise umschlingt beim Riementrieb ein Riemen, insbesondere ein Zahnriemen, Stahlband, Kette oder dergleichen die Räder des Riementriebs. Alternativ weist das Übertragungsmedium zwei Räder auf, die mittels der Stange als Bestandteil des Übertragungsmediums verbunden sind oder mit einer gemeinsamen, Bestandteil des Übertragungsmediums bildenden Zahnstange kämmen, oder, bei Ausbildung des Getriebesatzes, drei miteinander kämmende, das Übertragungsmedium bildende Räder, von denen das erste und dritte Rad dieselbe Schwenkrichtung aufweisen und in denen das Lagerelement gelagert ist. Durch diese Gestaltung ist eine eindeutige kinematische Bezeichnung zwischen den das Lagerelement aufnehmenden Rädern gewährleistet.

Weitere Merkmale der Erfindung sind in den Unteransprüchen, der Beschreibung der Zeichnung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand bevorzugter Ausführungsbeispiele dargestellt, ohne hierauf beschränkt zu sein. Es zeigt:
- Figur 1: für ein erstes Ausführungsbeispiel, eine Seitenansicht der erfindungsgemäßen Vorrichtung, wobei mit strichlierter Linie ein Gehäuse eines eine Düse aufweisenden Dosierventils mit veranschaulicht ist (in einer Ansicht I gemäß Figur 2), wobei ein Verschlussteil der Vorrichtung in einer Öffnungsstellung veranschaulicht ist,
- Figur 2: eine Ansicht der Vorrichtung gemäß Pfeil II in Figur 1,
- Figur 3: eine Ansicht der Vorrichtung gemäß Pfeil III in Figur 1,
- Figur 4: die Vorrichtung in einer geschnittenen Darstellung gemäß der Linie IV-IV in Figur 3,
- Figur 5: die Vorrichtung in einer Darstellung gemäß Figur 1, somit ohne Gehäuse des Dosierventils veranschaulicht, allerdings veranschaulicht für das in Schließstellung befindliche Verschlussteil,
- Figur 6: die Vorrichtung gemäß Figur 5 in einer Schnittdarstellung gemäß Figur 4,
- Figuren 7 bis 10: die Vorrichtung, somit ohne Gehäuse des Dosierventils gezeigt, bei in Öffnungsstellung befindlichem Verschlussteil, in unterschiedlichen räumlichen Ansichten veranschaulicht,
- Figur 11: eine Detaildarstellung des Verschlussteils im Bereich dessen dem Verschließen der Austrittsöffnung der Düse des Dosierventils dienenden Endes, veranschaulicht in vergrößerter Darstellung für die Öffnungsstellung und die Schließstellung des Verschlussteils, in Bezug zu dem dem Verschlussteil zugewandten Ende der Düse,
- Figur 12: eine Seitenansicht der Anordnung gemäß Figur 1, mit zusätzlich veranschaulichtem Führungsschuh,
- Figur 13: die Anordnung gemäß Figur 12 in einer Ansicht gemäß Pfeil 13 in Figur 12,
- Figur 14: für ein zweites Ausführungsbeispiel die Vorrichtung, somit ohne Gehäuse des Dosierventils gezeigt, bei in Öffnungstellung befindlichem Verschlussteil, in einer räumlichen Ansicht gemäß der Darstellung der Figur 7 betreffend das erste Ausführungsbeispiel veranschaulicht,
- Figur 15: eine Schnittdarstellung der Vorrichtung gemäß Figur 14, veranschaulicht für das in Öffnungsstellung befindliche Verschlussteil der Vorrichtung,
- Figur 16: eine Schnittdarstellung der Vorrichtung gemäß Figur 14, veranschaulicht für das in Schließstellung befindliche Verschlussteil der Vorrichtung,
- Figur 17: für ein drittes Ausführungsbeispiel die Vorrichtung, somit ohne Gehäuse des Dosierventils gezeigt, bei in Öffnungstellung befindlichem Verschlussteil, in einer räumlichen Ansicht gemäß der Darstellung der Figur 7 betreffend das erste Ausführungsbeispiel veranschaulicht,
- Figur 18: eine Schnittdarstellung der Vorrichtung gemäß Figur 17, veranschaulicht für das in Öffnungsstellung befindliche Verschlussteil der Vorrichtung,
- Figur 19: eine Schnittdarstellung der Vorrichtung gemäß Figur 17, veranschaulicht für das in Schließstellung befindliche Verschlussteil der Vorrichtung,

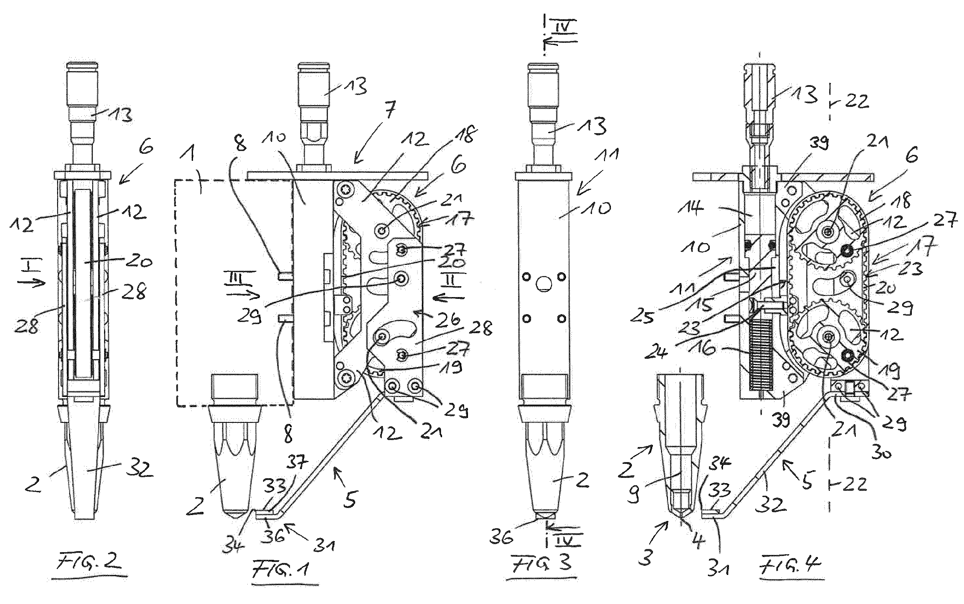

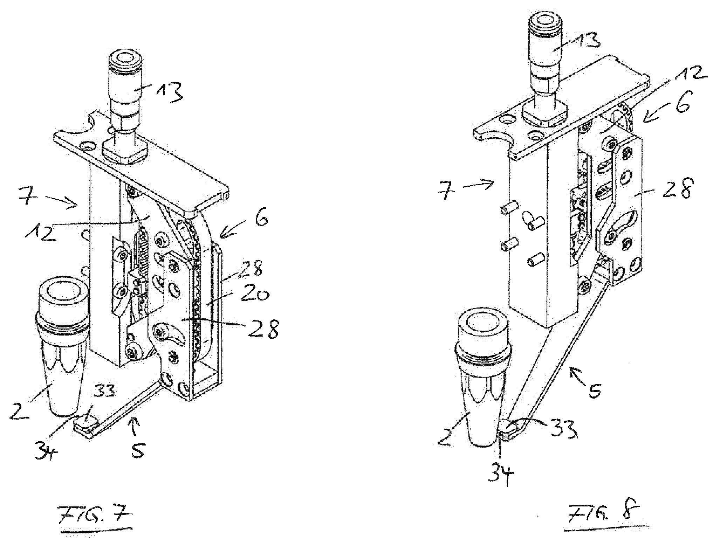

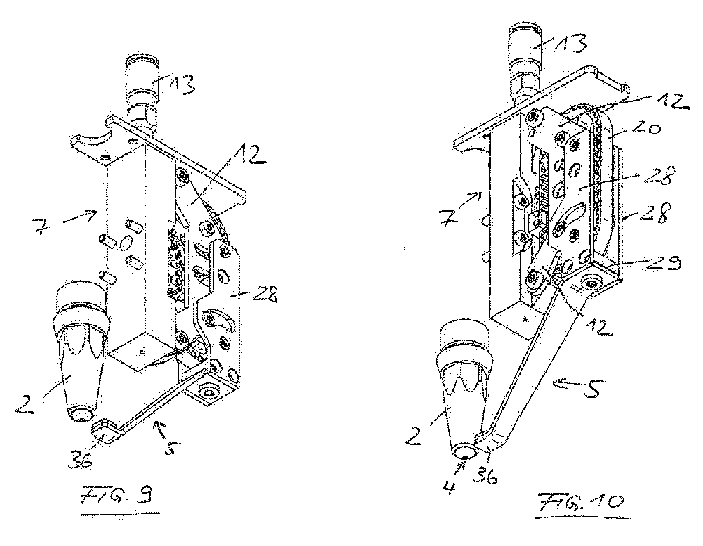

Die erfindungsgemäße Vorrichtung, die bezüglich des ersten Ausführungsbeispiels in den Figuren 1 bis 13 gezeigt ist, dient dem Ausgeben von fließfähigen Stoffen, insbesondere von Klebstoffen, Farben, Lacken und Trennmitteln zwecks Auftrag auf ein Substrat. Die Ausgabe der fließfähigen Stoffe erfolgt dabei gesteuert über ein Dosierventil, das nur bezüglich dessen Gehäuse 1 stark vereinfacht mittels der strichlierten Linie und der im Gehäuse 1 gelagerten Düse 2 in der Figur 1 veranschaulicht ist. In den anderen Figuren ist das Gehäuse 1 nicht gezeigt, sondern nur die Düse 2.

Über das Dosierventil sind verschiedene Auftragsarten von Klebstoffen auf ein Substrat möglich, zum Beispiel Linien-, Punkt-, Sprüh-, Spiral- oder Flächenauftrag möglich.

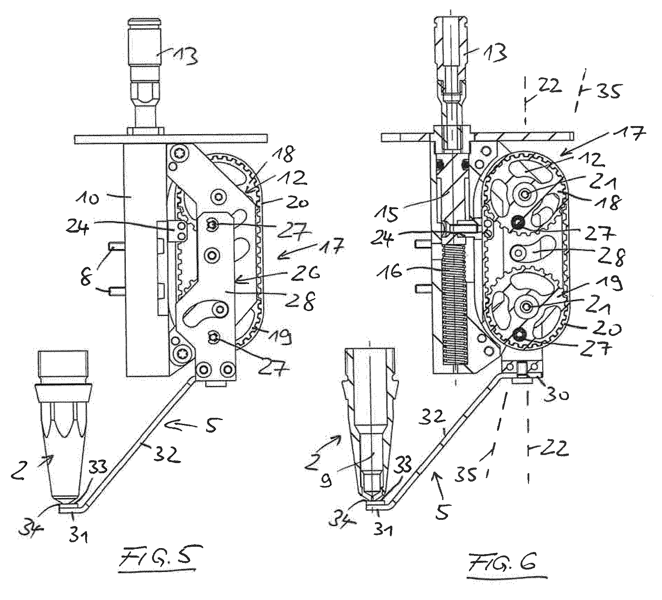

Die Düse weist im Bereich ihres freien Düsenendes 3 eine Austrittsöffnung 4 zum Ausgeben der Stoffe aus der Düse 2 auf. Außerhalb der Düse 2 ist ein Verschlussteil 5 angeordnet, das durch ein Stellmittel 6 verfahrbar ist. Das Verschlussteil 5 gibt in seiner Öffnungsstellung, wie sie in den Figuren 1 bis 4 und 7 bis 10 veranschaulicht ist, die Austrittsöffnung 4 frei und verschließt in der in den Figuren 5 und 6 veranschaulichten Schließstellung die Austrittsöffnung 4.

Das Stellmittel 6 weist einen Rahmen 7 auf. Dieser Rahmen 7 ist an das Gehäuse 1 mittels Schrauben 8 angeschraubt. Das Gehäuse 1 ist stationär. Der Rahmen 7 weist ein Gehäuse 10 eines als Pneumatikzylinder ausgebildeten Aktuators 11 und auf der dem Gehäuse 1 abgewandten Seite zwei parallel zueinander angeordnete plattenförmige Rahmenabschnitte 12 auf. Der Aktuator 11 weist einen Anschluss 13 zum Zuführen von Druckluft und einen im Gehäuse 10 zugeordneten Zylinderraum 14 zur verschieblichen Aufnahme eines Kolbens 15 auf. Der Kolben 15 ist unter Einwirkung von Druckluft entgegen der Kraft einer Feder 16 verschieblich.

Die Rahmenabschnitte 12 sind im Bereich der Enden des Gehäuses 10, denen der Anschluss 13 und die Feder 16 zugeordnet sind, mit an dem Gehäuse 10 angebrachten Laschen 39 verschraubt.

Im Rahmen 7, konkret in den beiden Rahmenabschnitten 12, ist ein Übertragungsmedium 17 gelagert, das als Riementrieb ausgebildet ist. Dieser weist zwei als Zahnräder ausgebildete Räder 18, 19 und einen diese umschlingenden Riemen 20, der als Zahnriemen ausgebildet ist, auf. Die beiden Räder 18 und 19 sind identisch ausgebildet und es verbindet die Lagerachsen 21 der Räder 18 und 19 eine Gerade 22, die parallel zur Hubrichtung des Kolbens 15 angeordnet ist. Demzufolge verlaufen Riemenabschnitte 23 zwischen den beiden Rädern 18, 19 parallel zur Gerade 22 und zur Längsachse des Kolbens 15.

Mit dem Kolben 15 ist ein Verbindungselement 24 verbunden, das radial angeordnet ist und ein Langloch 25 im Gehäuse 10 durchsetzt, wobei das aus dem Gehäuse 10 heraustretende Ende des Verbindungselements 24 mit dem Riemen 20 im Bereich des einen, dem Gehäuse 10 zugewandten Riemenabschnitts 23 fest verbunden ist. Demnach führt eine Hubbewegung des Kolbens 15 unter Einwirkung von Druckluft zu einem Bewegen des Riemens 20 um eine entsprechende Strecke entgegen dem Uhrzeigersinn und die Rückstellbewegung des Kolbens außer Einwirkung von Druckluft und unter Einwirkung der Feder 16 zur Rückstellbewegung des Riemens 20 um die entsprechende Hubstrecke des Kolbens 15. Mittels des pneumatischen Antriebs bzw. der Feder werden somit die Räder 18 und 19 in einer Schwenkrichtung und in einer hierzu entgegengesetzten Schwenkrichtung jeweils um denselben Schwenkwinkel verschwenkt.

In den beiden Rädern 18, 19 ist ein Lagerelement 26 für das Verschlussteil 5 in Abstand zu den Schwenkachsen der Räder 18, 19 schwenkbar gelagert. Hierbei ist das Lagerelement 26 um Achsen 27 der Räder 18, 19 schwenkbar gelagert, die parallel zu den Schwenkachsen 21 der Räder 18, 19 angeordnet sind. Das Lagerelement 26 weist zwei plattenförmige Lagerelementabschnitte 28 und diese verbindende Verbindungselemente 29 auf. Die Lagerabschnitte 28 sind parallel zu den Rahmenabschnitten 23 angeordnet, ferner sind die Rahmenabschnitte 23 zwischen den Lagerelementabschnitten 28 angeordnet. Die beiden Rahmenabschnitte 12 nehmen das Übertragungsmedium 17 bzw. die Räder 18, 19 mit geringem Axialspiel auf und es ist der jeweilige Lagerelementabschnitt 28 in geringem Abstand zum zugeordneten Rahmenabschnitt 12 angeordnet. Dies ist insbesondere der Darstellung der Figur 2 zu entnehmen, die veranschaulicht, dass das Stellmittel 6 in Richtung der Lagerachsen 21 sehr kompakt gestaltet ist.

Das Verschlussteil 5 weist im Bereich eines Endes einen Lagerabschnitt 30 auf, der mit dem Lagerelement 26 im Bereich der dem Rad 19 benachbarten Verbindungselemente 29 verbunden ist. Im Bereich des entgegengesetzten Endes weist das Verschlussteil 5 einen Verschlussteilabschnitt 31 zum Kontaktieren der Austrittsöffnung 4 auf. Ferner weist das Verschlussteil 5 einen den Lagerabschnitt 30 und den Verschlussteilabschnitt 31 verbindenden Verbindungsarm 32 auf. Das Verschlussteil 5 ist plattenförmig ausgebildet und weist eine Erstreckung in Achsrichtung der Räder, somit in Erstreckung der Lagerachsen 21 auf, die geringer ist als die Erstreckung des Lagerelements 26 in dieser Richtung.

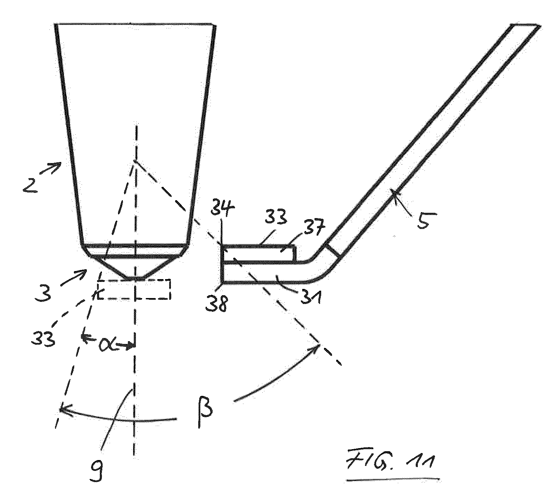

Bei Vergleich der Figuren 1 und 5 bzw. 4 und 6 und der Detaildarstellung gemäß Figur 11 ist zu entnehmen, dass die Verschlussteilfläche 33, somit diejenige Fläche des Verschlussteilabschnitts 31, die dem Verschließen der Austrittsöffnung 4 der Düse 2 in der Schließstellung des Verschlussteils 5 dient, in der Offenstellung neben der Düse 2 und auf einem Niveau stromaufwärts der Austrittsöffnung 4, bezogen auf die Strömungsrichtung der Stoffe durch die Düse 2, angeordnet ist. Ferner ist zu entnehmen, dass mittels des Stellmittels 6 das Verschlussteil 5 derart von der Öffnungsstellung in die Schließstellung bewegbar ist, dass eine Vorlaufkante 34 der Verschlussteilfläche 33 an dem konisch zulaufenden, freien Düsenende 3 vorbeibewegt wird. Hierbei schließt, in der Schließstellung des Verschlussteils 5, eine Verbindungsgerade zwischen der Schwenkachse des jeweiligen Rades und der Schwenkachse des Lagerelements in diesem Rad, veranschaulicht für das eine Rad 18 durch die Verbindungsgerade 35, einen Winkel mit der Geraden 22, die die Schwenkachsen 21 der Räder 18, 19 verbindet, von 5 bis 25°, vorzugsweise 10 bis 20°, insbesondere 15° ein. Dieser Winkel α ist in Figur 11 für den Bereich der Düse 2 veranschaulicht, wobei der Winkel α dort, zur besseren Veranschaulichung, deutlich größer dargestellt ist. Insgesamt ist mittels des Antriebs das jeweilige Rad 18, 19 um einen Winkel von 50 bis 70°, vorzugsweise 55 bis 65°, insbesondere 61° schwenkbar. Dieser Schwenkwinkel β ist, wieder für den Bereich der Düse 2, in Figur 11 veranschaulicht.

Der Verschlussteilabschnitt 31 weist ein Basiselement 36 und eine vom Basiselement 36 aufgenommene Platte 37 auf. Die Platte 37 weist auf deren dem Basiselement 36 abgewandten Seite die Verschlussteilfläche 33 auf. Die Platte 37 ist elastisch verformbar, insbesondere weist sie gummielastische Eigenschaften auf. Das Basiselement 36, der Verbindungsarm 32 und der Lagerabschnitt 30 bestehen aus Metall und weisen Federeigenschaft auf.

Die Verschlussteilfläche 33 ist eben. Beim Überführen des Verschlussteils 5 von der Offenstellung in die Schließstellung und umgekehrt ist die Verschlussteilfläche 33 senkrecht zu der die Räder verbindenden Gerade 22 und parallel zu den Schwenkachsen 21 der Räder 18, 19 angeordnet. Demzufolge wird die Verschlussteilfläche beim Verfahren von der Offenstellung in die Schließstellung und umgekehrt parallel verfahren. Die Verschlussteilfläche 33 ist dabei senkrecht zur Austrittsachse 9 der Austrittsöffnung 4 der Düse 2 angeordnet.

Die Vorlaufkante 34 der Verschlussteilfläche 33 stimmt mit einer Vorlaufkante 38 des Basiselements 36 überein.

Wie der Darstellung der Figuren 1 und 4 zu entnehmen ist, befindet sich das Verschlussteil 5 im Bereich deren Verschlussteilfläche 33 in der Offenstellung neben dem sich verjüngenden, insbesondere konisch verjüngenden Düsenende 3. Aufgrund der Kinematik des Stellmittels 6 wird, ausgehend von dieser Offenstellung, das Verschlussteil 5 so bewegt, dass die Vorlaufkante 34 an dem freien Düsenende vorbeibewegt wird. Es legt sich somit die Platte 37 erst hinter der Vorlaufkante 34 an die Düse 2 im Bereich des Düsenendes 3 an. Kontaktiert die Verschlussteilfläche 33 die Düse 2 wird das Verschlussteil 5 und damit die Verschlussteilfläche 33 weiter mit einer Bewegungskomponente senkrecht zur Austrittsachse 9 der Austrittsöffnung 4 der Düse 2 relativ zu dieser bewegt. Die Bewegung führt dazu, dass die Platte 37 Stoffreste, die sich im Bereich der Austrittsöffnung 4 der Düse 2 angesammelt haben, zur Seite mitnimmt, somit die Düse 2 im Bereich der Austrittsöffnung 4 von Stoffresten befreit.

Die Platte 37 ist somit mittels des Stellmittels 6 derart parallel verfahrbar, dass die Verschlussteilfläche 33 aus der Offenstellung in die Schließstellung bogenförmig bewegt wird, konkret, ausgehend von einer Übertotpunktlage in der Öffnungsstellung, in eine Totpunktlage vor Kontaktierung der Düse 2 mittels der Platte 37 und von dort in eine Übertotpunktlage in der Schließstellung der Platte 37. Die Federeigenschaft des Verschlussteils 5 stellt hierbei sicher, dass die Verschlussteilfläche 33, nach Kontakt mit der Austrittsöffnung 4 der Düse, mit einer gewissen Vorspannung gegen die Düse 2 gedrückt wird und hierdurch ein sicherer Verschluss der Austrittsöffnung 4 gewährleistet ist. Hierzu trägt auch die elastisch verformbare Ausbildung der Platte 37 bei.

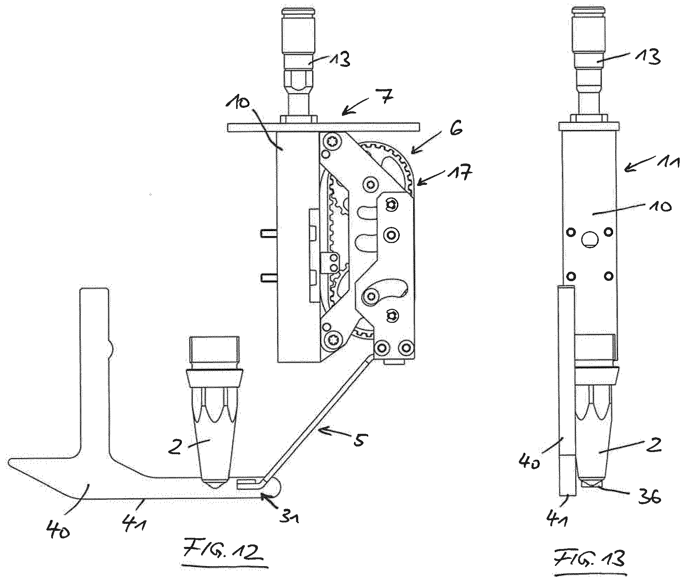

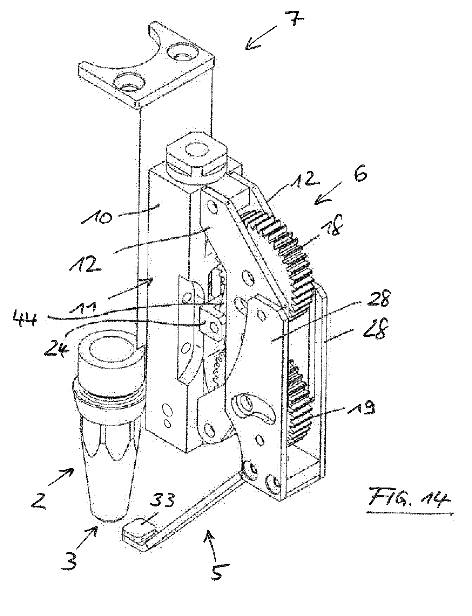

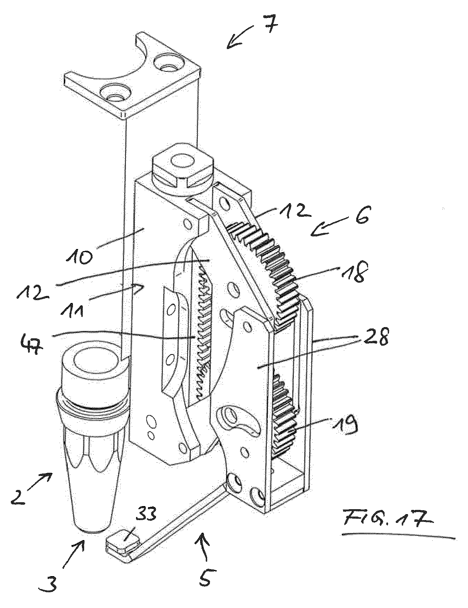

Die Figuren 12 und 13 zeigen, dass die in den Figuren 1 bis 11 veranschaulichte Vorrichtung zusätzlich mit einem integrierten Führungsschuh 40 versehen ist, der dazu vorgesehen ist, ein sich unterhalb der Düse 2 bewegendes Substrat im Bereich der Unterseite 41 des Führungsschuhs 40 zu führen. Hierbei ermöglicht die schmale und dünne Ausgestaltung des Verschlussteils 5, insbesondere im Bereich des Verschlussteilabschnitts 31 einen geringen Abstand zwischen der Austrittsöffnung der Düse 2 und dem an der Unterseite 41 anliegenden Substrat, beispielsweise einen Abstand von max. 5 mm, insbesondere 3 mm. Weiterhin ermöglicht die Kinematik des Verschlussteils 5, dass die Düse 2 in ihrer Dosierposition verbleiben kann, wenn das Verschlussteil in seine Schließstellung überführt wird. Auch der Führungsschuh 40 ist, wie insbesondere der Darstellung der Figur 13 zu entnehmen ist, recht schmal gestaltet und weißt insbesondere eine konstante Stärke auf, so dass sich eine quasi plattenförmige Gestaltung des Führungsschuhs 40 ergibt.
Das zweite Ausführungsbeispiel gemäß der Figuren 14 bis 16 und das dritte Ausführungsbeispiel gemäß der Figuren 17 bis 19 unterscheidet sich jeweils vom ersten Ausführungsbeispiel, wie es in den Figuren 1 bis 13 beschrieben ist, nur durch die Ausbildung des Übertragungsmediums 17, das die Winkelsynchronität der im Rahmen 7 schwenkbar gelagerten Räder 18, 19 erzeugt. Um Wiederholungen betreffend die Beschreibung des zweiten und dritten Ausführungsbeispiels zu vermeiden, sind mit dem ersten Ausführungsbeispiel übereinstimmende Bauteile der Einfachheit halber mit denselben Bezugsziffern bezeichnet.
Bei dem zweiten Ausführungsbeispiel gemäß der Figuren 14 bis 16 werden die beiden Räder 18, 19 nicht von einem Riemen 20 umschlungen, sondern es ist statt des Riemens zwischen den Rädern 18 und 19, die als Zahnräder ausgebildet sind, ein weiteres Rad 42, das gleichfalls als Zahnrad ausgebildet ist, angeordnet. Dieses Bestandteil des Übertragungsmediums 17 bildende Rad 42 ist um eine Lagerachse 43 schwenkbar im Rahmen 7, konkret im Rahmenabschnitt 12 gelagert, wobei diese Lagerachse 43 parallel zu den Lagerachsen 21 der Räder 18 und 19 angeordnet ist. Der Raddurchmesser des Rades 42 ist deutlich geringer als der Durchmesser des jeweiligen Rades 18, 19. Die Räder 18, 19 sind identisch ausgebildet, somit als identische Zahnräder ausgebildet, womit mittels des Rades 18 das Rad 22 und mittels dieses Rades 22 das Rad 19 synchron antreibbar ist. Diese Ausbildung des Übertragungsmediums 17 als Getriebesatz bewirkt somit dieselbe synchrone Bewegung der Räder 18 und 19 wie die Ausbildung des Übertragungsmediums 17 bei dem ersten Ausführungsbeispiel, das den Riementrieb aufweist.

Angetrieben wird das Rad 18 mittels des Aktuators 11, wobei das mit dem Kolben 15 verbundene Verbindungselement 24 schwenkbar mit einer Stange 24 verbunden ist, die schwenkbar mit dem Rad 18 verbunden ist. Die Lagerachse 45 von Verbindungselement 24 und Stange 44 sowie die Lagerachse 46 von Stange 44 und Rad 18 sind jeweils parallel zu den Lagerachsen 21 angeordnet.

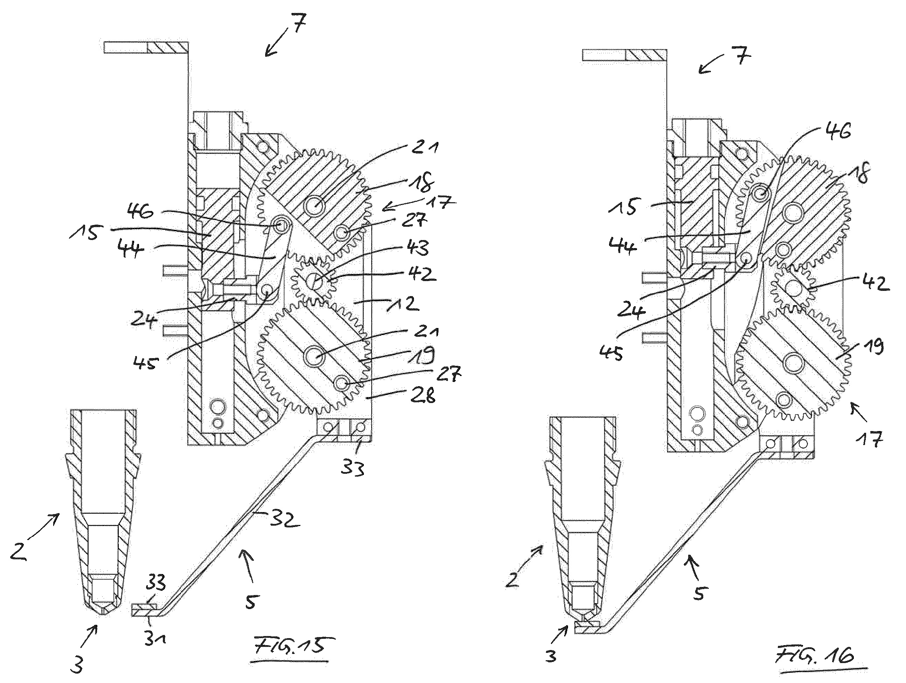

Figur 14 und Figur 15 zeigen die Anordnung des Aktuators 11, des Verbindungselements 24 und der Stange 44 in der Öffnungsstellung des Verschlussteils 5.

Figur 16 zeigt die Anordnung des Aktuators 11, des Verbindungselements 24 und der Stange 44 in der Schließstellung des Verschlussteils 5.

Das dritte Ausführungsbeispiel unterscheidet sich von dem ersten Ausführungsbeispiel dadurch, dass statt eines Riemens 20, insbesondere Zahnriemens, der die Räder 18, 19, insbesondere Zahnräder, umschlingt, die beiden identisch ausgebildeten Zahnräder 18, 19 in Eingriff mit einer Zahnstange 47 sind, die Bestandteil des Übertragungsmediums 17 bildet. Diese Zahnstange ist mittels des Verbindungselements 24 mit dem Aktuator 11 verbunden. Die Zahnstange 47 bewirkt die synchrone Drehbewegung der Räder 18, 19. Verfahren wird die Zahnstange mittels des Aktuators 11 in der Verfahrrichtung des Kolbens 15.

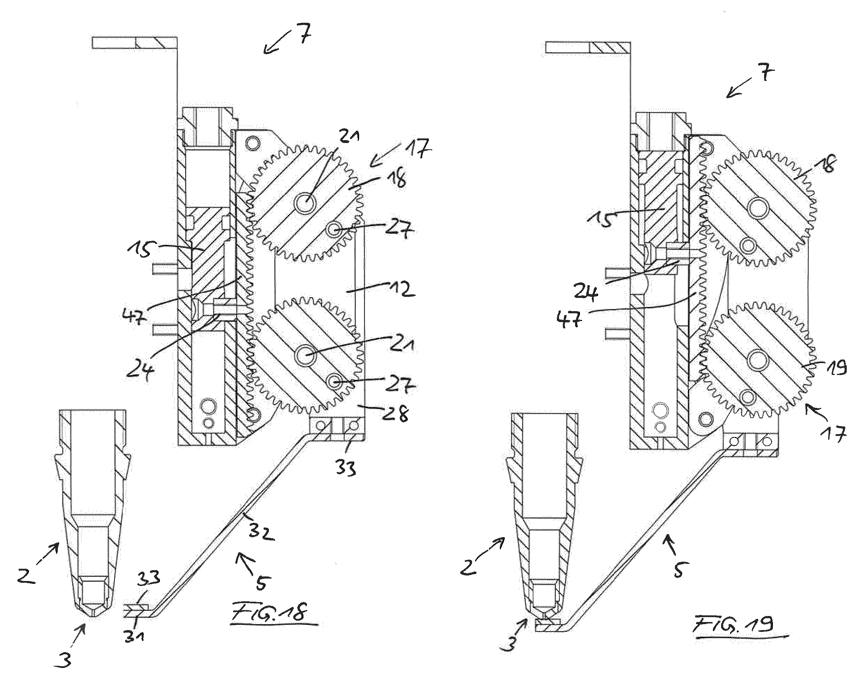

Figuren 17 und 18 zeigen die Zahnstange 47 in deren einen Endstellung, in der sich das verfahrbare Verschlussteil 5 in der Öffnungsstellung befindet. Figur 19 zeigt die Zahnstange 47 in der anderen Endstellung, in der sich das Verschlussteil 5 in seiner Schließstellung befindet.

### Bezugszeichenliste

- 1: Gehäuse
- 2: Düse
- 3: Düsenende
- 4: Austrittsöffnung
- 5: Verschlussteil
- 6: Stellmittel
- 7: Rahmen
- 8: Schraube
- 9: Austrittsachse
- 10: Gehäuse
- 11: Aktuator
- 12: Rahmenabschnitt
- 13: Anschluss
- 14: Zylinderraum
- 15: Kolben
- 16: Feder
- 17: Übertragungsmedium
- 18: Rad
- 19: Rad
- 20: Riemen
- 21: Lagerachse
- 22: Gerade
- 23: Riemenabschnitt
- 24: Verbindungselement
- 25: Langloch
- 26: Lagerelement
- 27: Schwenkachse
- 28: Lagerelementabschnitt
- 29: Verbindungselement
- 30: Lagerabschnitt
- 31: Verschlussteilabschnitt
- 32: Verbindungsarm
- 33: Verschlussteilfläche
- 34: Vorlaufkante
- 35: Verbindungsgrade
- 36: Basiselement
- 37: Platte
- 38: Vorlaufkante
- 39: Lasche
- 40: Führungsschuh
- 41: Unterseite
- 42: Rad
- 43: Lagerachse
- 44: Stange
- 45: Lagerachse
- 46: Lagerachse
- 47: Zahnstange

## Patentansprüche

1. Vorrichtung zum Ausgeben von fließfähigen Stoffen, mit einer Düse (2), die im Bereich eines freien Düsenendes (3) eine Austrittsöffnung (4) zum Ausgeben der Stoffe aus der Düse (2) aufweist, sowie mit einem außerhalb der Düse (2) angeordneten, durch ein Stellmittel (6) verfahrbaren Verschlussteil (5), das in einer Öffnungsstellung die Austrittsöffnung (4) frei gibt und in einer Schließstellung, im Bereich einer dem Düsenende (3) zugewandten Verschlussteilfläche (33), die Austrittsöffnung (4) verschließt, wobei die Verschlussteilfläche (33), in Bewegungsrichtung des Verschlussteils (5) von der Öffnungsstellung in die Schließstellung, vorlaufend durch eine Vorlaufkante (34) begrenzt ist, wobei die Verschlussteilfläche (33) in der Öffnungsstellung neben der Düse (2) und auf einem Niveau stromaufwärts der Austrittsöffnung (4), bezogen auf die Strömungsrichtung der Stoffe durch die Düse (2), angeordnet ist, und mittels des Stellmittels (6) das Verschlussteil (5) derart von der Öffnungsstellung in die Schließstellung bewegbar ist, dass die Vorlaufkante (34) der Verschlussteilfläche (33) an dem freien Düsenende (3) vorbei bewegt wird, **dadurch gekennzeichnet, dass** das Verschlussteil (5) mittels des Stellmittels (6) derart verfahrbar ist, dass die Verschlussteilfläche (33), bei Kontakt mit der Düse (2) im Bereich deren Austrittsöffnung (4), mit einer Bewegungskomponente senkrecht zu einer Austrittsachse (9) der Austrittsöffnung (4) der Düse (2) bewegt wird.

2. Vorrichtung nach Anspruch 1, **dadurch gekennzeichnet, dass** die Düse (2) in Richtung des Düsenendes (3) verjüngend ausgebildet ist und die Verschlussteilfläche (33) in der Offenstellung neben dem verjüngenden Düsenbereich angeordnet ist.

3. Vorrichtung nach Anspruch 1 oder 2, **dadurch gekennzeichnet, dass** das Verschlussteil (5) Federeigenschaft aufweist.

4. Vorrichtung nach einem der Ansprüche 1 bis 3, **dadurch gekennzeichnet, dass** das Verschlussteil (5) im Bereich dessen dem Stellmittel (6) abgewandten Endes einen Verschlussteilabschnitt (31) aufweist, der die Verschlussteilfläche (33) aufweist.

5. Vorrichtung nach Anspruch 4, **dadurch gekennzeichnet, dass** der Verschlussteilabschnitt (31) ein Basiselement (36) und eine vom Basiselement (36) aufgenommene Platte (37) aufweist, wobei die Platte (37) auf deren dem Basiselement (36) abgewandten Seite die Verschlussteilfläche (33) aufweist.

6. Vorrichtung nach Anspruch 5, **dadurch gekennzeichnet, dass** die Vorlaufkante (34) der Verschlussteilfläche (33) des plattenseitigen Verschlussteilabschnitts (31) mit einer Vorlaufkante (38) des Basiselements (36) übereinstimmt.

7. Vorrichtung nach Anspruch 5 oder 6, **dadurch gekennzeichnet, dass** die Platte (37) elastisch verformbar ist, insbesondere gummielastische Eigenschaften aufweist.

8. Vorrichtung nach einem der Ansprüche 1 bis 7, **dadurch gekennzeichnet, dass** das Verschlussteil (5) einen endseitigen Lagerabschnitt (30), im Bereich dessen das Verschlussteil (5) stellmittelseitig gelagert ist, den endseitigen Verschlussteilabschnitt (31) und zwischen Lagerabschnitt (30) und Verschlussteilabschnitt (31) einen Verbindungsarm (32) aufweist.

9. Vorrichtung nach einem der Ansprüche 1 bis 8, **dadurch gekennzeichnet, dass** das Verschlussteil (5) plattenförmig ausgebildet ist.

10. Vorrichtung nach einem der Ansprüche 1 bis 9, **dadurch gekennzeichnet, dass** das Verschlussteil (5) mittels des Stellmittels (6) derart verfahrbar ist, dass die Verschlussteilfläche (33) beim Verfahren von der Öffnungsstellung in die Schließstellung parallel verfahren wird.

11. Vorrichtung nach einem der Ansprüche 1 bis 10, **dadurch gekennzeichnet, dass** das Verschlussteil (5) mittels des Stellmittels (6) derart verfahrbar ist, dass die Verschlussteilfläche (33) beim Verfahren von Öffnungsstellung in die Schließstellung senkrecht zu einer Austrittsachse (9) der Austrittsöffnung (4) der Düse (2) angeordnet ist.

12. Vorrichtung nach einem der Ansprüche 1 bis 11, **dadurch gekennzeichnet, dass** das Verschlussteil (5) mittels des Stellmittels (6) derart verfahrbar ist, dass die Verschlussteilfläche (33) aus der Öffnungsstellung in die Schließstellung bogenförmig bewegt wird, insbesondere bei Übertotpunktlagen in der Öffnungsstellung und der Schließstellung sowie bei einer Totpunktlage in einer Zwischenstellung zwischen Öffnungsstellung und Schließstellung.

13. Vorrichtung nach einem der Ansprüche 1 bis 12, **dadurch gekennzeichnet, dass** das Stellmittel (6) aufweist:
- einen Rahmen (7),
- ein Formschluss erzeugendes, Räder (18, 19) aufweisendes Übertragungsmedium (17), das eine Winkelsynchronität von im Rahmen (7) schwenkbar gelagerten Rädern (18, 19) erzeugt,
- einen Antrieb (11, 16) für das Übertragunsgmedium (17), zum Schwenken des jeweiligen Rades (18, 19) in einer Schwenkrichtung und einer hierzu entgegengesetzten Schwenkrichtung,
- ein in Rädern (18, 19) schwenkbar gelagertes Lagerelement (26) für das Verschlussteil (5), wobei das Lagerelement (26) um Schwenkachsen (27) in diesen Rädern (18, 19) schwenkbar gelagert ist, wobei diese Schwenkachsen (27) parallel zu den Schwenkachsen (21) dieser Räder (18, 19) im Rahmen (7) angeordnet sind,
wobei das Verschlussteil (5) im Lagerelement (26) gelagert ist.

14. Vorrichtung nach Anspruch 13, **dadurch gekennzeichnet, dass** das Übertragungsmedium (17) als Riementrieb ausgebildet ist und im Rahmen (7) der Antrieb (11, 16) für den Riementrieb (17) gelagert ist, wobei der Antrieb (11, 16) ein hin und her verfahrbares Verbindungselement (24) aufweist, das mit dem Riemen (20) verbunden ist, wobei das Verbindungselement (24) mit einem geraden Abschnitt des Riemens (20) verbunden ist und geradlinig in entgegengesetzten Richtungen verfahrbar ist.

## Claims

1. Apparatus for dispensing free-flowing substances, having a nozzle (2) which, in the region of a free end (3), has an exit opening (4) for dispensing the substances from the nozzle (2), and having a closure part (5) which is arranged outside the nozzle (2), can be displaced by an adjusting means (6), releases the exit opening (4) when in an open position and closes the exit opening (4), in the region of a closure-part surface (33) directed towards the nozzle end (3), when in a closed position, wherein the closure-part surface (33), as seen in the direction in which the closure part (5) moves from the open position into the closed position, is bounded at the front by a leading edge (34), wherein the closure-part surface (33), in the open position, is arranged alongside the nozzle (2) and at a level upstream of the exit opening (4), as seen in relation to the direction of flow of the substances through the nozzle (2), and the adjusting means (6) can be used to move the closure part (5) from the open position into the closed position such that the leading edge (34) of the closure-part surface (33) is moved past the free nozzle end (3), **characterized in that** the closure part (5) can be displaced by way of the adjusting means (6) such that the closure-part surface (33), upon contact with the nozzle (2) in the region of the exit opening (4) thereof, is moved with a movement component in a direction perpendicular to an exit axis (9) of the exit opening (4) of the nozzle (2).

2. Apparatus according to Claim 1, **characterized in that** the nozzle (2) is designed to taper in the direction of the end (3) and the closure-part surface (33), in the open position, is arranged alongside the tapering nozzle region.

3. Apparatus according to Claim 1 or 2, **characterized in that** the closure part (5) has a resilient property.

4. Apparatus according to one of Claims 1 to 3, **characterized in that**, in the region of its end which is directed away from the adjusting means (6), the closure part (5) has a closure-part portion (31), which has the closure-part surface (33).

5. Apparatus according to Claim 4, **characterized in that** the closure-part portion (31) has a base element (36) and a plate (37), which is accommodated by the base element (36), wherein, on its side which is directed away from the base element (36), the plate (37) has the closure-part surface (33).

6. Apparatus according to Claim 5, **characterized in that** the leading edge (34) of the closure-part surface (33) of the plate-side closure-part portion (31) coincides with a leading edge (38) of the base element (36).

7. Apparatus according to Claim 5 or 6, **characterized in that** the plate (37) is elastically deformable, in particular has elastomeric properties.

8. Apparatus according to one of Claims 1 to 7, **characterized in that** the closure part (5) has an end-side bearing portion (30), in the region of which the closure part (5) is mounted on the adjusting-means side, and also has the end-side closure-part portion (31) and, between the bearing portion (30) and closure-part portion (31), a connecting arm (32).

9. Apparatus according to one of Claims 1 to 8, **characterized in that** the closure part (5) is of plate-like design.

10. Apparatus according to one of Claims 1 to 9, **characterized in that** the closure part (5) can be displaced by way of the adjusting means (6) such that the closure-part surface (33), when being displaced from the open position into the closed position is displaced in a parallel state.

11. Apparatus according to one of Claims 1 to 10, **characterized in that** the closure part (5) can be displaced by way of the adjusting means (6) such that the closure-part surface (33), when being displaced from the open position into the closed position, is arranged in a direction perpendicular to an exit axis (9) of the exit opening (4) of the nozzle (2).

12. Apparatus according to one of Claims 1 to 11, **characterized in that** the closure part (5) can be displaced by way of the adjusting means (6) such that the closure-part surface (33) is moved in arcuate form from the open position into the closed position, in particular in the case of over dead centres in the open position and the closed position and in the case of a dead centre in an intermediate position between the open position and closed position.

13. Apparatus according to one of Claims 1 to 12, **characterized in that** the adjusting means (6) has:
- a frame (7),
- a form-fit-generating transmission medium (17) which has wheels (18, 19) and provides for angle synchronization of wheels (18, 19) mounted in a pivotable manner in the frame (7),
- a drive (11, 16) for the transmission medium (17), for the purpose of pivoting the respective wheel (18, 19) in one pivoting direction and in a pivoting direction counter thereto,
- a bearing element (26) which is mounted in a pivotable manner in wheels (18, 19) and is intended for the closure part (5), wherein the bearing element (26) is mounted in said wheels (18, 19) such that it can be pivoted about pivot pins (27), said pivot pins (27) being arranged parallel to the pivot pins (21) of said wheels (18, 19) in the frame (7),
wherein the closure part (5) is mounted in the bearing element (26).

14. Apparatus according to Claim 13, **characterized in that** the transmission medium (17) is designed in the form of a belt drive, and the drive (11, 16) for the belt drive (17) is mounted in the frame (7), wherein the drive (11, 16) has a connecting element (24) which can be displaced back and forth and is connected to the belt (20), wherein the connecting element (24) is connected to a rectilinear portion of the belt (20) and can be displaced rectilinearly in opposite directions.

## Revendications

1. Dispositif de distribution de produits fluides, avec une buse (2) comportant, dans la région d'une extrémité de buse (3) libre, une ouverture de sortie (4) pour distribuer les produits sortant de la buse (2), ainsi qu'avec une partie de fermeture (5) disposée à l'extérieur de la buse (2), pouvant être déplacée par un moyen de réglage (6) et libérant l'ouverture de sortie (4) dans une position d'ouverture et fermant l'ouverture de sortie (4) dans une position de fermeture, dans la région d'une surface de partie de fermeture (33) orientée vers l'extrémité de buse (3), la surface de partie de fermeture (33) étant limitée par une bord de tête (34) placé en tête, dans la direction de déplacement de la partie de fermeture (5), de la position d'ouverture dans la position de fermeture, la surface de partie de fermeture (33) étant disposée dans la position d'ouverture à côté de la buse (2) et sur un niveau prévu en amont de l'ouverture de sortie (4), par rapport à la direction d'écoulement des produits traversant la buse (2), et la partie de fermeture (5) pouvant être déplacée de telle sorte, à l'aide du moyen de réglage (6), de la position d'ouverture dans la position de fermeture, que le bord de tête (34) de la surface de partie de fermeture (33) est déplacé en avant au niveau de l'extrémité de buse (3) libre, **caractérisé en ce que** la partie de fermeture (5) peut être déplacée à l'aide du moyen de réglage (6) de telle sorte que la surface de partie de fermeture (33) est déplacée, en cas de contact avec la buse (2) dans la région de son ouverture de sortie (4), avec une composante de mouvement perpendiculaire à un axe de sortie (9) de l'ouverture de sortie (4) de la buse (2).

2. Dispositif selon la revendication 1, **caractérisé en ce que** la buse (2) est réalisée de façon à se rétrécir en direction de l'extrémité de buse (3) et que la surface de partie de fermeture (33) est disposée, dans la position ouverte, à côté de la région de buse se rétrécissant.

3. Dispositif selon la revendication 1 ou 2, **caractérisé en ce que** la partie de fermeture (5) présente une propriété de ressort.

4. Dispositif selon l'une quelconque des revendications 1 à 3, **caractérisé en ce que** la partie de fermeture (5) comporte, dans la région de son extrémité opposée au moyen de réglage (6), une section de partie de fermeture (31) comportant la surface de partie de fermeture (33).

5. Dispositif selon la revendication 4, **caractérisé en ce que** la section de partie de fermeture (31) comporte un élément de base (36) et une plaque (37) reçue par l'élément de base (36), la plaque (37) comportant la surface de partie de fermeture (33) sur son côté opposé à l'élément de base (36).

6. Dispositif selon la revendication 5, **caractérisé en ce que** le bord de tête (34) de la surface de partie de fermeture (33) de la section de partie de fermeture (31) située du côté de plaque coïncide avec le bord de tête (38) de l'élément de base (36).

7. Dispositif selon la revendication 5 ou 6, **caractérisé en ce que** la plaque (37) est déformable de façon élastique, notamment comporte des propriétés d'élasticité de type caoutchouc.

8. Dispositif selon l'une quelconque des revendications 1 à 7, **caractérisé en ce que** la partie de fermeture (5) comporte une section de palier (30) située du côté d'extrémité dans la région de laquelle la partie de fermeture (5) est disposée du côté du moyen de réglage, la section de partie de fermeture (31) située du côté d'extrémité et un bras de liaison (32) prévu entre la section de palier (30) et la section de partie de fermeture (31).

9. Dispositif selon l'une quelconque des revendications 1 à 8, **caractérisé en ce que** la partie de fermeture (5) est réalisée en forme de plaque.

10. Dispositif selon l'une quelconque des revendications 1 à 9, **caractérisé en ce que** la partie de fermeture (5) peut être déplacée de telle sorte à l'aide du moyen de réglage (6) que la surface de partie de fermeture (33) est déplacée parallèlement lors du passage de la position d'ouverture dans la position de fermeture.

11. Dispositif selon l'une quelconque des revendications 1 à 10, **caractérisé en ce que** la partie de fermeture (5) peut être déplacée de telle sorte à l'aide du moyen de réglage (6) que la surface de partie de fermeture (33) est disposée, lors du passage de la position d'ouverture dans la position de fermeture, perpendiculairement à un axe de sortie (9) de l'ouverture de sortie (4) de la buse (2).

12. Dispositif selon l'une quelconque des revendications 1 à 11, **caractérisé en ce que** la partie de fermeture (5) peut être déplacée de telle sorte, à l'aide du moyen de réglage (6), que la surface de partie de fermeture (33) est déplacée en forme d'arc de la position d'ouverture dans la position de fermeture, notamment en cas de positions de passage brusque, dans la position d'ouverture et dans la position de fermeture ainsi qu'en cas de position de point mort, dans une position intermédiaire entre la position d'ouverture et la position de fermeture.

13. Dispositif selon l'une quelconque des revendications 1 à 12, **caractérisé en ce que** le moyen de réglage (6) comporte :
- un châssis (7) ;
- un agent de transmission (17) comportant des roues (18, 19) produisant une complémentarité de formes et produisant une synchronicité d' angle des roues (18, 19) disposées de façon pivotante dans le châssis (7) ;
- un entraînement (11, 16) pour l'agent de transmission (17), pour faire pivoter la roue (18, 19) respective dans une direction de pivotement et une direction de pivotement opposée à elle ;
- un élément de palier (26) disposé de façon pivotante dans les roues (18, 19) pour la partie de fermeture (5), l'élément de palier de roulement (26) étant disposé de façon à pouvoir pivoter dans ces roues (18, 19) autour des axes de pivotement (27), ces axes de pivotement (27) étant disposés parallèlement aux axes de pivotement (21) de ces roues (18, 19) dans le châssis (7) ;
la partie de fermeture (5) étant disposée dans l'élément de palier (26).

14. Dispositif selon la revendication 13, **caractérisé en ce que** l'agent de transmission (17) est réalisé sous la forme d'un entraînement à courroie et est disposé dans le châssis (7) de l'entraînement (11, 16) pour l'entraînement à courroie (17), l'entraînement (11, 16) comportant un élément de liaison (24) pouvant effectuer un mouvement de va-et-vient et étant relié à la courroie (20), l'élément de liaison (24) étant relié à une section droite de la courroie (20) et pouvant être déplacé en ligne droite dans les directions opposées.
